Europäisches Patentamt

**European Patent Office**

Office européen des brevets

(11) Veröffentlichungsnummer: **0 015 001**
**B1**

(12) **EUROPÄISCHE PATENTSCHRIFT**

(45) Veröffentlichungstag der Patentschrift:
25.05.83

(21) Anmeldenummer: **80100864.0**

(22) Anmeldetag: **21.02.80**

(51) Int. Cl.³: **H 02 G 5/06**

(54) **Befestigungskonstruktion einer Stütze für Starkstromschienen, insbesondere für rohrgekapselte Starkstromschienen.**

(30) Priorität: **22.02.79 PL 213664**

(43) Veröffentlichungstag der Anmeldung:
**03.09.80 Patentblatt 80/18**

(45) Bekanntmachung des Hinweises auf die Patenterteilung:
**25.05.83 Patentblatt 83/21**

(84) Benannte Vertragsstaaten:
**CH DE FR GB IT SE**

(56) Entgegenhaltungen:
**FR-A-1 264 074**
**US-A-3 351 705**
**US-A-3 809 801**

(73) Patentinhaber: **Przedsiebiorstwo Montazu Elektrycznego "Elektrobudowa", Zawadzkiego 20e, Katowice, ul. (PL)**

(72) Erfinder: **Hologa, Zygmunt, Katowice, ul., Mikolowska 37/39 m. 41 (PL)**
Erfinder: **Madeyski, Krystyn, Katowice, ul., B. Chrobrego 25/33 (PL)**
Erfinder: **Kurowski, Adam, Katowice, ul., Mikolowska 37/10 (PL)**

(74) Vertreter: **Lehn, Werner, Dipl.-Ing. et al, Hoffmann, Eitle & Partner Patentanwälte Arabellastrasse 4 (Sternhaus), D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Befestigungskonstruktion einer Stütze für Starkstromschienen, insbesondere für rohrgekapselte Starkstromschienen

Die Erfindung bezieht sich auf eine Befestigungskonstruktion einer Stütze für Starkstromschienen, insbesondere für rohrgekapselte Starkstromschienen, mit einer auskragenden Montageplatte, die, auf die Mitte der Rohrkapsel zu gerichtet, derart innerhalb einer Montage-Kontrollöffnung der Rohrkapsel befestigt ist, daß seitlich der Montageplatte Teilbereiche dieser Öffnungen frei bleiben, wobei die genannte Öffnung von einem an die Rohrkapsel geschweißten Flansch umgeben ist, auf den ein die gesamte Öffnung abdeckender Deckel befestigt ist.

Aus der US-A-3 351 705 ist eine Befestigungskonstruktion einer Stütze für Starkstromschienen bekanntgeworden, bei der eine rechteckige Form des Montage-Kontroll-Mannlochs vorliegt. Die die Umrahmung der Öffnung in der Kapselung bildenden Flansche weisen im Querschnitt die Form eines Buchstabens »L« oder eines Winkels auf. Die Isolatorstütze ist eine starr an bestimmten Elementen befestigte Platte. Die Isolationsstütze ist mit der Kragplatte vormontiert (pre-assembled), wie dies in Fig. 5 dargestellt ist. Daraus ergibt sich, ebenso wie im Zusammenhang mit der FR-A-1 264 074, daß beim Austausch der Stütze die gesamte Kragplatte und die Stütze entnommen werden muß, so daß die Stromschiene dann nicht mehr sorgfältig gehalten ist.

Die Aufgabe der Erfindung liegt daher darin, eine verbesserte Befestigungskonstruktion einer Stütze für Starkstromschienen zu schaffen, durch die nicht nur eine einwandfreie Zugänglichkeit zur Starkstromschiene und zur Stütze gewährleistet ist, sondern darüber hinaus eine einfache und die Lage der Starkstromschiene nicht beeinträchtigende Möglichkeit des Austausches einer derartigen Stütze.

Diese Aufgabe wird erfindungsgemäß dadurch gelöst, daß die Montage-Kontrollöffnung oval ausgebildet ist, daß auf die auskragende Montageplatte eine Austauschstütze absetzbar ist, bevor die vorherige, beschädigte Stütze entfernt ist, und daß die Montageplatte an den gegenüberliegenden Flächen der ovalen Öffnung derart befestigt ist, daß die Montageplatte in Richtung zur Mitte der Stromschiene verschiebbar ist.

Die Verbindung der angegebenen technischen Mittel ermöglicht die Erzielung der folgenden Vorteile der Erfindung, und zwar:

Die ovale Öffnung in der Kapsel spielt zugleich die Rolle einer Montage- und Kontrollöffnung der Stütze und des Aufsatzes.

Die Aufstellung der Stütze auf einem Kragarm erlaubt es, nach der Abnahme des Deckels die Besichtigung und Wartung jeder Stütze und seines Aufsatzes durchzuführen, ohne die Stütze demontieren zu müssen. Falls der Austausch einer Stütze notwendig ist, wird eine neue Stütze auf den Kragarm gestellt und dann die beschädigte Stütze entfernt, ohne die Lage der Stromschiene zu ändern.

Die Befestigung des Kragarmes der Stütze an den inneren gegenüberliegenden Flächen des Flansches der Montage-Kontrollöffnung erleichtert die Montage des Kragarmes der Stütze und ermöglicht die Regelung der Einlagerung des Kragarmes zur Mitte der Stromschine oder auf der längeren Achse der ovalen Öffnung. Das Abschließen der ovalen Öffnung mittels eines Deckels vereinfacht die Konstruktion und verbessert die Dichtigkeit der Kapsel. Falls die Befestigung einer federnden Stoßdämpfungsstütze notwendig ist, wird die Lösung durch schiebbare Befestigung des Kragarmes der Stütze an den inneren gegenüberliegenden Flächen des Flansches der Montage-Kontrollöffnung erreicht, wodurch eine Spurbewegung des Kragarmes der Stütze zur Mitte der Stromschiene gewährleistet wird, sowie durch Anordnung eines federnden stoßdämpfenden Elementes zwischen dem Kragarm der Stütze und dem Deckel der ovalen Öffnung. Die ovale Gestalt der Montage-Kontrollöffnung erfordert im Gegensatz zu den anderen Ausgestaltungen, ein notwendiger Montage-Kontrollraum vorausgesetzt, die kleinste Flanschlänge, was ein wichtiges Argument ist, wenn die Kanten des Flansches dieser Öffnung mit der Kapsel verschweißt werden sollen. Außerdem weist die Längsanordnung der ovalen Öffnung gegenüber der Längsachse der Stromschiene keinen negativen Einfluß auf die Festigkeit der Kapsel auf. Die Versicherung des Zuganges zu dem Stützenaufsatz seitens der Stützengrundfläche vermindert den Abstand zwischen der Öffnung und dem Einsatz bis auf die Stützenhöhe, wodurch die Montage des Aufsatzes erleichtert wird.

Die erfindungsgemäßen Stützen werden nachstehend anhand der in der Zeichnung dargestellten Ausführungsbeispiele näher erläutert. Es zeigt:

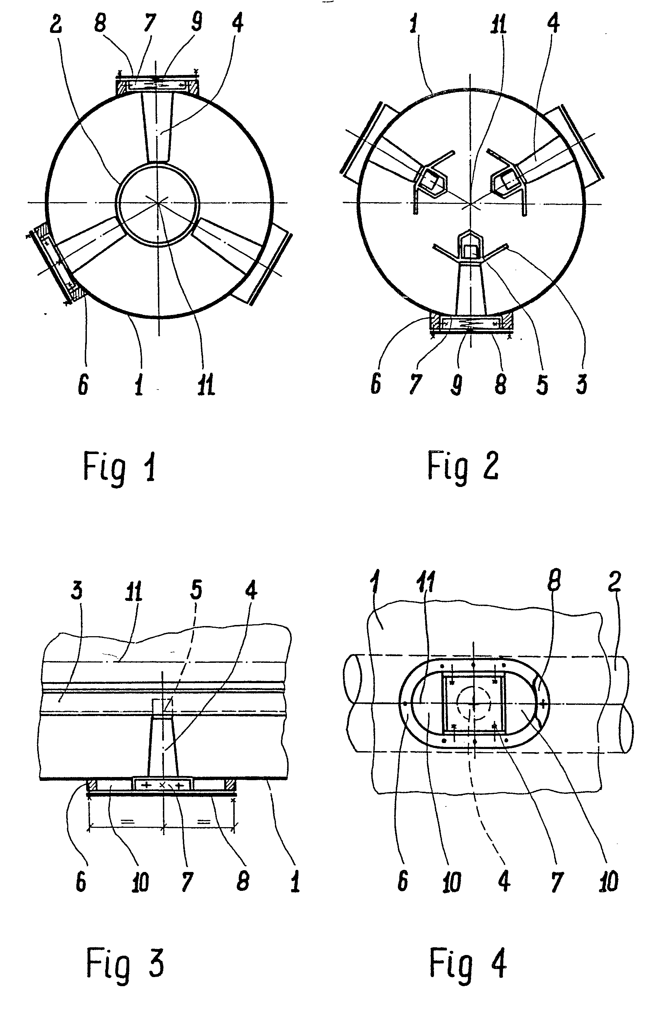

Fig. 1 den Querschnitt einer Starkstromschiene von einphasigen Generatorverbindungen,

Fig. 2 den Querschnitt einer dreiphasigen Starkstromschiene,

Fig. 3 einen Schnitt an der Befestigungsstelle einer Stütze längs der längeren Achse einer ovalen Montage-Kontrollöffnung, und

Fig. 4 die Unteransicht der ovalen Montage-Kontrollöffnung mit abgenommenem Deckel.

Die die Stromschienen 2 und 3 innerhalb der Kapsel 1 unterstützenden isolierenden Stützen 4 von Starkstromschienen, insbesondere von Starkstromschienen in Rohrkapseln 1, sind an dem Kragarm 7 befestigt, der an den inneren gegenüberliegenden Flächen eines vorzugsweise ovalen Flansches 6 einer Montage-Kontrollöffnung in dessen Symmetrieachse befestigt ist. Die an den beiden Seiten des Kragarmes 7 gebildeten freien Räume bilden die Montageöffnungen 10 der Stütze 4 und des Stützenaufsatzes 5. Der Kragarm 7 sowie die Montage-Kontrollöff-

3    0 015 001    4

nungen 10 sind mittels eines Deckels 8 geschlossen. Außerdem kann in notwendigen (besonderen) Fällen der Kragarm 7 an den inneren gegenüberliegenden Flächen eines vorzugsweise ovalen Flansches 6 der Montage-Kontrollöffnung verschiebbar befestigt werden, wodurch eine Spurbewegung des Kragarmes 7 mit der Stütze 4 zur Mitte der Stromschiene 11 durch Anordnung eines federnden stoßdämpfenden Elementes zwischen dem Kragarm 7 und dem Deckel 8 gewährleistet wird.

## Patentansprüche

1. Befestigungskonstruktion einer Stütze für Starkstromschienen, insbesondere für rohrgekapselte Starkstromschienen, mit einer auskragenden Montageplatte, die, auf die Mitte der Rohrkapsel zu gerichtet, derart innerhalb einer Montage-Kontrollöffnung der Rohrkapsel befestigt ist, daß seitlich der Montageplatte Teilbereiche dieser Öffnung frei bleiben, wobei die genannte Öffnung von einem an die Rohrkapsel geschweißten Flansch umgeben ist, auf den ein die gesamte Öffnung abdeckender Deckel befestigt ist, dadurch gekennzeichnet, daß die Montage-Kontrollöffnung oval ausgebildet ist, daß auf die auskragende Montageplatte (7) eine Austauschstütze absetzbar ist, bevor die vorherige, beschädigte Stütze entfernt ist, und daß die Montageplatte (7) an den gegenüberliegenden Flächen der ovalen Öffnung derart befestigt ist, daß die Montageplatte (7) in Richtung zur Mitte der Stromschiene (11) verschiebbar ist.

2. Befestigungskonstruktion nach Anspruch 1, dadurch gekennzeichnet, daß zwischen der Montageplatte (7) und dem Deckel (8) ein Federelement (9) angeordnet ist.

## Claims

1. Fastening design for a bracket for power bar, especially for tubular encapsulated power rails, with a cantilever assembly plate which, directed toward the center of the tubular capsule, is secured within an assembly control aperture of said tubular capsule so that to the side of said assembly plate, portions of this aperture remain free, whereby said aperture is sorrounded by a flange welded to said tubular capsule, while on said flange a cover is secured which covers the entire aperture, characterized in that the assembly control aperture is designed in oval shape, that the projecting assembly plate (7) a replacing bracket can be placed before the previous, damged bracket is removed, and that the assembly plate (7) is secured on the opposite surfaces of said oval aperture so that said assembly plate (7) can be displaced in the direction of the center of the power rail (11).

2. Fastening design according to patent claim 1, characterized in that between said assembly plate (7) and said cover (8), a spring element (9) is provided.

## Revendications

1. Construction de fixation d'un appui pour rails à courant fort, en particulier pour rails à courant fort blindés par un tube, avec une plaque de montage qui dépasse qui, dirigée vers le milieu du tube de blindage, est fixée à l'intérieur d'une ouverture de contrôle de montage du tube de blindage de façon que sur les côtés de la plaque de montage, des parties de cette ouverture restent libres, ladite ouverture étant entourée d'une bride soudée au tube de blindage, et un couvercle y est fixé qui recouvre toute l'ouverture, caractérisée en ce que l'ouverture de contrôle de montage est de forme ovale, en ce que sur la plaque de montage (7) faisant saillie, peut être placé un appui d'échange, avant que l'appui endommagé précédent ne soit retiré, et en ce que la plaque de montage (7) est fixée sur les surfaces en vis-à-vis de l'ouverture ovale de façon que ladite plaque de montage (7) puisse être glissée vers le milieu du rail conducteur (11).

2. Construction de fixation selon la revendication 1, caractérisée en ce qu'entre la plaque de montage (7) et le couvercle (8) est disposé un élément à ressort (9).

Fig 1

Fig 2

Fig 3

Fig 4